# EUROPÄISCHE PATENTSCHRIFT

(11) **EP 0 845 720 B1**
(45) Veröffentlichungstag und Bekanntmachung des Hinweises auf die Patenterteilung: **17.11.1999**
(21) Anmeldenummer: 97120787.3
(22) Anmeldetag: 27.11.1997
(51) Int. Cl.: G05B 19/042, G06F 15/80

(54) **Verfahren zur Analyse und Darstellung von transienten Prozessvorgängen**
Method of analyzing and monitoring of transient processes
Méthode d'analyse et de visualisation d'états transitoires d'un processus

(30) Priorität: 02.12.1996 DE 19649633
(43) Veröffentlichungstag der Anmeldung: 03.06.1998
(73) Patentinhaber: ABB PATENT GmbH, 68309 Mannheim (DE)
(72) Erfinder: Otte, Ralf, Dipl.-Ing., 69469 Weiheim (DE); Rappenecker, Gerd, Dr., 69469 Weinheim (DE); Goser, Karl, Professor Dr., 58097 Hagen (DE)
(74) Vertreter: Rupprecht, Klaus, Dipl.-Ing.

(56) Entgegenhaltungen:
- WO-A-97/14113
- US-A- 5 448 681
- NIEBUR D ET AL: "POWER SYSTEM STATIC SECURITY ASSESSMENT USING THE KOHONEN NEURAL NETWORK CLASSIFIER" 7.Mai 1991 , PROCEEDINGS OF THE POWER INDUSTRY COMPUTER APPLICATION CONFERENCE, BALTIMORE, MAY 7 - 10, 1991, NR. CONF. 17, PAGE(S) 270 - 277 , INSTITUTE OF ELECTRICAL AND ELECTRONICS ENGINEERS XP000294080 * das ganze Dokument *
- HIROYUKI MORI ET AL: "AN ARTIFICIAL NEURAL-NET BASED TECHNIQUE FOR POWER SYSTEM DYNAMIC STABILITY WITH THE KOHONEN MODEL" 7.Mai 1991 , PROCEEDINGS OF THE POWER INDUSTRY COMPUTER APPLICATION CONFERENCE, BALTIMORE, MAY 7 - 10, 1991, NR. CONF. 17, PAGE(S) 293 - 301 , INSTITUTE OF ELECTRICAL AND ELECTRONICS ENGINEERS XP000294083 * das ganze Dokument *
- WHITTINGTON G ET AL: "AN EFFICIENT MULTIPROCESSOR MAPPING ALGORITHM FOR THE KOHONEN FEATURE MAP AND ITS DERIVATIVE MODELS" 27.Juni 1994 , INTERNATIONAL CONFERENCE ON NEURAL NETWORKS/ WORLD CONGRESS ON COMPUTATIONAL INTELLIGENCE, ORLANDO, JUNE 27 - 29, 1994, VOL. 1, PAGE(S) 17 - 21 , INSTITUTE OF ELECTRICAL AND ELECTRONICS ENGINEERS XP000510384 * das ganze Dokument *
- RITTER H ET AL: "KOHONEN'S SELF-ORGANIZING MAPS: EXPLORING THEIR COMPUTATIONAL CAPABILITIES" 24.Juli 1988 , PROCEEDINGS OF THE INTERNATIONAL CONFERENCE ON NEURAL NETWORKS, SAN DIEGO, JULY 24 - 27, 1988, NR. 1988, PAGE(S) 109 - 116 , INSTITUTE OF ELECTRICAL AND ELECTRONICS ENGINEERS XP000014740 * das ganze Dokument *
- KOHONEN T: "THE SELF-ORGANIZING MAP" 1.September 1990 , PROCEEDINGS OF THE IEEE, VOL. 78, NR. 9, PAGE(S) 1464 - 1480 XP000165407 * das ganze Dokument *
- PATENT ABSTRACTS OF JAPAN vol. 017, no. 511 (E-1432), 14.September 1993 & JP 05 130737 A (TOSHIBA CORP), 25.Mai 1993,
- PATENT ABSTRACTS OF JAPAN vol. 018, no. 285 (C-1206), 31.Mai 1994 & JP 06 049515 A (KOBE STEEL LTD), 22.Februar 1994,

## Beschreibung

Die Erfindung bezieht sich auf ein Verfahren zur Analyse und Darstellung von Prozeßzuständen und Prozeßvorgängen einer technischen Anlage.

Das Verfahren ist geeignet zur Analyse und Darstellung von Prozeßzuständen und Vorgängen einer Kraftwerksanlage.

Es ist allgemein bekannt, einzelne Prozeßgrößen meßtechnisch zu erfassen, zu betrachten und auch prozeßzustandsabhängig auszuwerten. Eine bessere Beurteilung eines technischen Prozesses ist jedoch durch eine gleichzeitige, ganzheitliche Betrachtung aller relevanten Prozeßgrößen möglich.

In dem Aufsatz Niebur D. et al.: "POWER SYSTEM STATIC SECURITY ASSESSMENT USING THE KOHONEN NEURAL NETWORK CLASSIFIER" 7. Mai 1991, PROCEEDINGS OF THE POWER INDUSTRY COMPUTER APPLICATION CONFERENCE, BALTIMORE, MAY 7-10, 1991, NR. CONF. 17, PAGES 270-277, INSTITUTE OF ELECTRICAL AND ELECTRONICS ENGINEERS XP000204080 ist ein Verfahren zur Analyse und Darstellung von Prozeßgrößen und Prozeßzuständen einer technischen Anlage beschrieben. Dabei werden für einen Prozeß relevante Größen zusammengefaßt und durch eine neuronale Analyse auf der Grundlage von Kohonen-Karten in Beziehung zueinander ausgewertet, indem eine topologieerhaltende Projektion von Daten der relevanten Prozeßgrößen auf einer zweidimensionalen Kohonen-Karte realisiert wird. Ein Verfahren zur Darstellung und Auswertung von zeitlichen Folgen von Prozeßzuständen ist allerdings darin nicht beschrieben.

Der Erfindung liegt die Aufgabe zugrunde, ein Verfahren anzugeben, das eine gleichzeitige und zusammenhängige Bewertung und Anzeige relevanter Prozeßzustände und Folgen von Prozeßzuständen einer technischen Anlage ermöglicht. Insbesondere soll die Analyse und Darstellung von transienten Prozeßvorgängen ermöglicht werden. Außerdem soll eine Erweiterung des Verfahrens für eine Diagnose transienter Vorgänge angegeben werden.

Diese Aufgabe wird durch ein Verfahren zur Analyse und Darstellung von Prozeßzuständen und Prozeßverläufen mit den im Anspruch 1 bzw. Anspruch 2 angegebenen Merkmalen gelöst.

Vorteilhafte Ausgestaltungen sind in weiteren Ansprüchen angegeben.

Ein anderer denkbarer Lösungsansatz wäre ein Verfahren auf Grundlage der Hauptkomponentenanalyse, also ein mathematisches Verfahren zur Dimensionsreduktion, mit dem angestrebt wird, eine Datenverteilung aus einem hoch-dimensionalen Raum möglichst gut in einem niedrig-dimensionalen Raum zu beschreiben. Bei der Hauptkomponentenanalyse bzw. Varianzanalyse wird das durch eine lineare Projektion in einem Raum - der durch die Eigenvektoren der Datenverteilung aufgespannt wird - realisiert. Dieser lineare Ansatz bedeutet aber Restriktionen, weshalb die Hauptkomponentenanalyse nicht als befriedigende Lösung der gestellten Aufgabe angesehen wird.

Durch die erfindungsgemäße Anwendung nichtlinearer, neuronaler Methoden wird eine allgemeine Realisierbarkeit des Verfahrens auch für schwierigste Datenverteilungen gewährleistet, sie unterliegt keinen linearen Restriktionen.

Durch den ganzheitlichen Ansatz werden nicht nur die Werte der einzelnen Prozeßgrößen, sondern auch gerade ihre gegenseitigen Einflüsse untereinander berücksichtigt.

Es wird verfahrensgemäß eine Projektion auf nichtlineare Flächen, sogenannte Hauptmannigfaltigkeiten, durchgeführt. Diese nichtlinearen Flächen werden durch sogenannte topologieerhaltende Kohonen-Karten im Zustandsraum der Anlage aufgespannt. In der neuronalen Theorie versteht man unter einer solchen Karte ein "selbstorganisierendes neuronales Netz", bei dem alle Neuronen nebeneinander angeordnet sind. Das selbstorganisierende neuronale Netz ist ein eingeführter Begriff für eine spezielle Klasse von neuronalen Netzen, die sich anhand von Eingangssignalen selbst strukturieren, vgl. A. Zell "Simulation Neuronaler Netze", Addison-Wesley Verlag, 1994, Seite 179 bis 187. Im Unterschied zu herkömmlichen neuronalen Netzen, spielt die räumliche Lage der einzelnen Neuronen bei den Kohonen-Karten eine wichtige Rolle.

Der durch das Verfahren berechnete Prozeßzustand wird auf dieser topologieerhaltenden Karte von potentiellen Prozeßzuständen aufgetragen und visualisiert und ist weiterhin auch direkt mit anderen, z.B. vorherigen Prozeßzuständen, vergleichbar. Damit stellt die Karte im Prinzip ein topologieerhaltendes, 2-dimensionales Fenster in den n-dimensionalen Zustandsraum der Anlage dar. Topologieerhaltend heißt im Zusammenhang mit dieser Beschreibung, daß die Punkte, die im Eingangsraum nahe beieinander liegen, auch im Ausgangsraum, also auf der Karte, nahe beieinander liegen werden.

Beim erfindungsgemäßen Verfahren werden nach einer entsprechenden Datenvorverarbeitung einem selbstorganisierenden Netz in einer Lernphase die relevanten n Prozeßgrößen angeboten. Die Lernphase erfolgt in zwei Schritten: Zuerst entfaltet sich die Karte im Zustandsraum der Anlage, danach werden die Anlagenzustände durch Anwendung eines mathematischen Verfahrens visualisiert.

Die Entfaltung der selbstorganisierenden Karte im Zustandsraum der Anlage wird durch den "neuronalen Algorithmus nach T. Kohonen" realisiert. Der selbstorganisierende neuronale Algorithmus wurde von Kohonen im Jahr 1982 eingeführt; vgl. T. Kohonen, ,,Self-organized formation of topologically correct feature maps" in Biological Cybernetics, 43, 59-69, 1982, weshalb diese Karten auch als Kohonen-Karten bezeichnet werden.

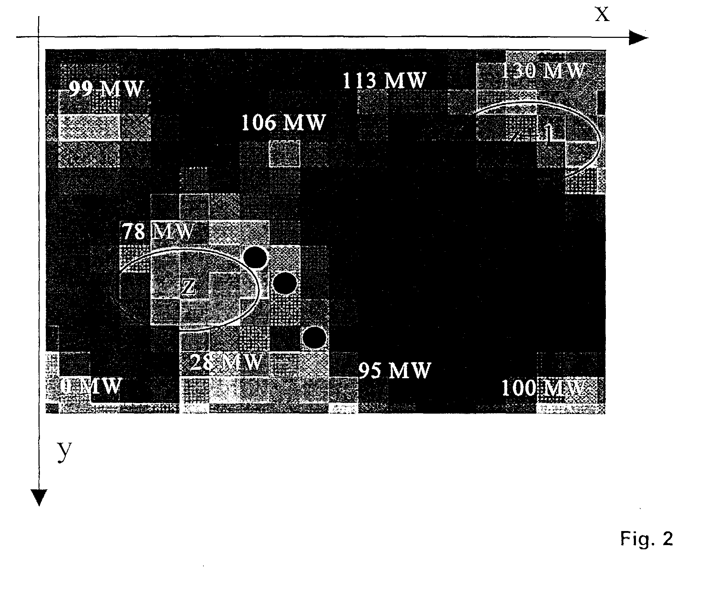

Die Visualisierung der physikalischen Anlagenzustände geschieht nach einem statischen Visualisierungsverfahren, bei dem die Differenzen der Gewichtsvektoren eines jeden Neurons zu seinen Nachbarn berechnet und entsprechend graphisch aufbereitet, z.B. farbkodiert dargestellt werden. Zusammenhängende Gebiete (z. B. helle Flächen in Fig. 2) haben eine kleine Differenz, da ihre Neuronen im Zustandsraum nahe beieinander plaziert wurden. Zwischen diesen einzelnen Clustern gibt es Grenzen, die durch eine hohe Differenz der jeweiligen Gewichtsvektoren gekennzeichnet sind, diese werden z.B. als dunkle Flächen (vgl. Fig. 2) visualisiert. Damit läßt sich eine gute Visualisierung der Clustergrenzen und damit der realen Anlagenzustände erreichen, siehe auch G. Whittington, C. Spracklen: The Application of Neural Network Model to Sensor Data Fusion in Proc. of Applications of ANN Conference, Orlando, USA, 1990.

Mit dieser Visualiserung wird eine topologieerhaltende Abbildung aller relevanten Anlagenzustände realisiert, d.h. in der Realität verschiedene Anlagenzustände werden auch auf der Karte räumlich getrennt voneinander dargestellt. Durch die Wahl der Farbkodierungen auf dieser neuronalen Karte werden verschiedene Datencluster für den Prozeßbeobachter visuell aufbereitet.

In der Anwendungsphase der Karte können durch Aufbau und Entwicklung einer Trajektorie von Prozeßzuständen auf dieser Karte mittels eines "Winner-takesall"-Algorithmus Aussagen über den aktuellen und zukünftigen Prozeßzustand getroffen werden. Der Winner-takes-all Algorithmus ist ein Verfahren, bei dem immer nur das Neuron aktiv ist, das eine gewisse Bedingung am besten erfüllt, alle anderen Neuronen des Netzes oder der Karte sind inaktiv (1-aus-m Auswahl). Diese besondere Bedingung ist z.B. minimales Abstandsmaß zwischen dem aktuellen Eingangsvektor und dem Gewichtsvektor der einzelnen Neuronen, siehe S. Hafner, "Neuronale Netze in der Automatisierungstechnik", Oldenbourg Verlag, 1994, insbesondere Seiten 17 bis 25.

Eine Analyse der einzelnen Prozeßgrößenverteilungen auf der Karte, erlaubt das Erkennen von neuartigen Prozeßzusammenhängen und Störungen. Eine Rücktransformation der abstrakten Darstellung der Karte auf die einzelnen Prozeßgrößen erlaubt das Ermitteln von Ursachen für Prozeßabweichungen. Damit kann das Verfahren zur on-line Prozeßführung, Fehlerfrüherkennung und Diagnose eingesetzt werden.

Durch Aufbau und Entwicklung einer hierarchischen Kohonen-Karte wird das Verfahren automatisiert, in dem Sinne, daß das Verfahren Abweichungen von Prozeßvorgängen -dargestellt als Trajektorien auf einer Karte- von einem Referenzvorgang *automatisch* erkennen und die zugrundeliegenden Ursachen bestimmen kann.

Eine weitere Beschreibung des Verfahrens erfolgt nachstehend ahhand von in den Zeichnungsfiguren dargestellten Ausführungsbeispielen, die sich auf Lastzustände eines Kraftwerks beziehen.

Es zeigen:
- Fig. 1: ein Strukturbild, das die wesentlichen Komponenten eines Systems zur Durchführung des Verfahrens zeigt,
- Fig. 2: eine neuronale Karte für neun verschiedene Lastzustände eines Kessels,
- Fig. 3 und 4: den Trajektorienverlauf beim Anfahren und Lastwechsels eines Kessels für zwei verschiedenen Vorgänge,
- Fig. 5: die unterschiedliche Gewichtsverteilung zweier Neuronen auf der entfalteten Karte,
- Fig. 6 und 7: die Prozeßgrößenverteilung zweier ausgewählter Prozeßgrößen über der Karte und
- Fig. 8: den schematischen Aufbau eines automatischen Fehlererkennungssystems mit hierarchischen Kohonen-Karten.

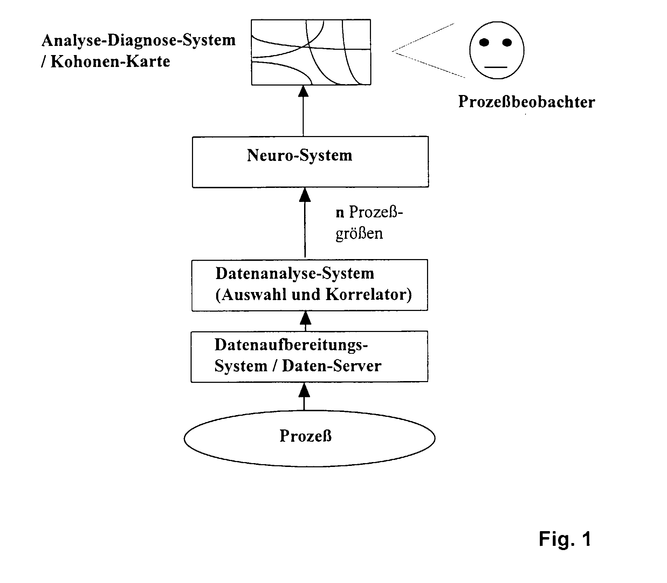

Die Beschreibung des Verfahrens ist im folgenden in verschiedenen Verfahrensschritte gegliedert und wird anhand der in den Zeichnungsfiguren gezeigten Abbildungsbeispielen erläutert. **Fig. 1** zeigt die Struktur eines Systems zur Durchführung des Verfahrens zur Prozeßanalyse und Diagnose mit neuronaler Karte. Eine Beschreibung der Struktur ergibt sich aus der Beschreibung der Verfahrensschritte.

### Verfahrensschritt 1: Aufnahme und Auswahl der Prozeßgrößen

Aufnahme und Aufbereitung der Daten. Ein Datenerfassungs- und aufbereitungssystem, beispielsweise ein Datenserver basierend auf einem Rechner eines Leitsystems, erfaßt zyklisch Prozeßwerte aus einer technischen Anlage, beispielsweise von einem Kessel einer Kraftwerksanlage. Ein nachfolgendes Datenanalysesystem unterzieht die ausgewählten und relevanten Daten einer Korrelationsanalyse, um die unabhängigen, prozeßbeschreibenden Meßgrößen zu bestimmen.

### Verfahrensschritt 2: Lernphase der Karte (off-line)

Schritt 2.1. Entfaltung des selbstorganisierenden, neuronalen Netzes im Zustandsraum der Anlage, basierend auf Algorithmus von T. Kohonen.
Prinzipiell werden durch den Kohonen-Algorithmus die Gewichtsvektoren der Neuronen auf der Karte, unter Berücksichtigung ihrer Nachbarschaftsbeziehungen und des Eingangsvektors adaptiert.

Als Eingangsgrößen für das Netz werden die physikalischen Prozeßwerte der o.g. Prozeßgrößen verwendet.

Schritt 2.2. Darstellung des entfalteten Netzes als Karte -als sogenannte Map- durch Anwendung einer statischen Visualisierungsmethode, indem die Differenzen der Gewichtsvektoren der Neuronen visualisiert werden.

**Fig. 2** zeigt beispielhaft - hier in einer Schwarz/weiß-Darstellung - die strukturierte und farbkodierte, neuronale Karte für verschiedene Anlagenzustände eines Kessels (helle zusammenhängende Flächen). Es stellt die Projektion und Visualisierung von mehreren Lastzuständen des Kessels auf einer neuronalen Karte mit 15*20 Neuronen dar. Die aktuelle Last des Kraftwerkes in Megawatt ist für die jeweiligen Cluster im Bild mit Hand eingetragen. In Fig. 2 gibt die x-Achse die Anzahl der Neuronen in x-Richtung, die y-Achse die Anzahl der Neuronen in y-Richtung an. Die Anlagenzustände z und z+1 stellen zwei unterschiedliche Lastzustände der Anlage dar.

Die dunklen Gebiete auf der Karte bilden die Grenzen zwischen den verschiedenen Anlagenzuständen, da sie Neuronen darstellen, die im Anlagenraum sehr weit voneinander entfernt sind. Die hellen Cluster der Karte bilden Neuronen, die im Anlagenraum sehr nahe beieinander liegen, sie entsprechen den realen Lastzuständen der Anlage.

Obwohl in diesem Beispiel jeder Anlagenzustand durch 11 unabhängige Prozeßgrößen bestimmt wird und damit 11-dimensional ist, kann durch das Verfahren eine Projektion auf nur zwei Dimensionen durchgeführt werden; damit wird eine erheblich bessere Übersichtlichkeit über die tatsächlichen Prozeßzustände erreicht als bei der einzelnen Betrachtung aller 11 Prozeßgrößen. Die Anzahl der gleichzeitig ausgewerteten Prozeßgrößen ist nicht auf 11 beschränkt, sie kann wesentlich höher sein.

Mit diesem Verfahren wird somit eine topologieerhaltende Abbildung aller relevanten Anlagenzustände realisiert, z.B. in der Realität verschiedene Lastzustände werden auch auf der Karte räumlich getrennt dargestellt.

### Verfahrensschritt 3: Anwendung - Prozeßanalyse mit der Karte (off-line / on-line)

Schritt 3.1. Anbindung der Karte an den Prozeß und Darstellung des aktuellen Prozeßzustandes auf der strukturierten Karte.

In der Anwendungsphase, d.h. während des Betriebes der Kraftwerksanlage, wird der aktuelle Prozeßzustand durch einen neuronalen "Winner-takes-all" Algorithmus ausgewertet und auf der vorher strukturierten und farbkodierten Karte aufgetragen. In Fig. 2 entsprechen die drei schwarzen Kreise drei Anlagenzuständen zu verschiedenen Zeitpunkten t. Damit kann der aktuelle, i.a. hochdimensionale Anlagenzustand im Kontext anderer Anlagenzustände visualisiert werden. Die räumliche Lage des aktuellen Prozeßzustandes auf der strukturierten Karte gibt Auskunft über den aktuellen Zustand der Anlage.

Schritt 3.2. Graphische Verbindung von Gewinnerneuronen
In der Anwendungsphase wird das jeweils aktuelle Gewinnerneuron zum Zeitpunkt t₀ z.B. durch einen schwarzen Kreis markiert (vgl. Fig. 2). Verbindet man diese Gewinnerneuronen miteinander, entwickelt sich auf der strukturierten Karte mit der Zeit t eine Trajektorie der aktuellen Prozeßzustände, die entweder ständig wächst oder bei fester vorgegebener Länge auf der Karte wandert.

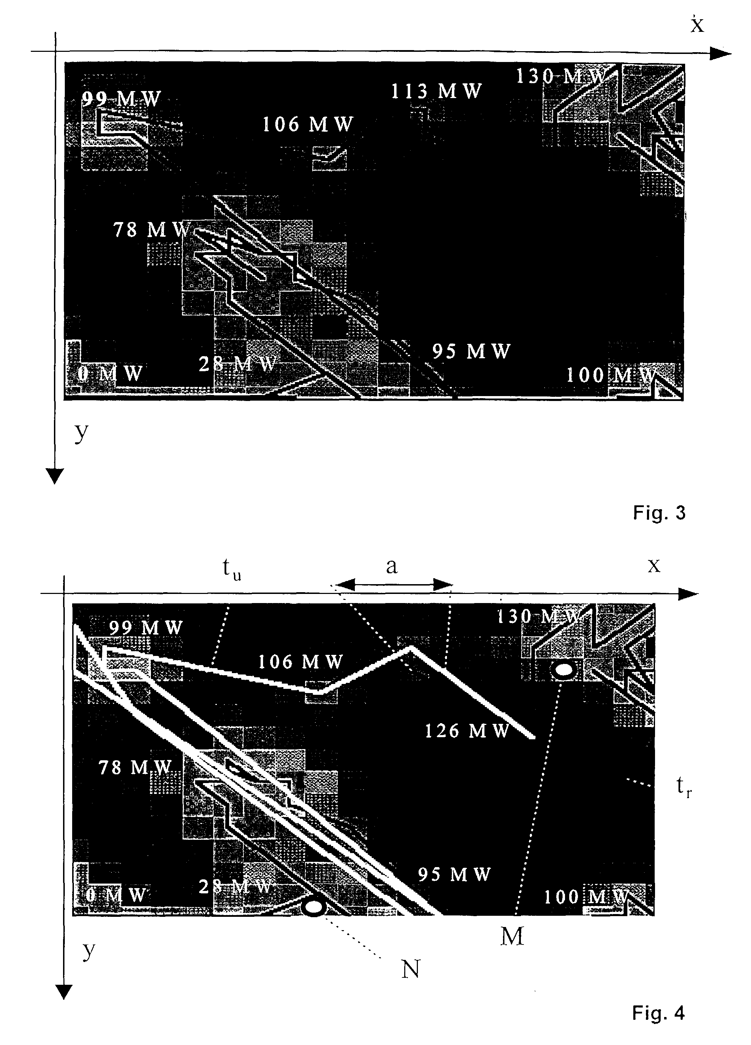

**Fig. 3** zeigt - hier in einer Schwarz/Weiß-Darstellung - beispielhaft einen solchen Trajektorienverlauf auf einer strukturierten, farbkodierten, neuronalen Karte mit 15*20 Neuronen beim Anfahren und Lastwechsel eines Kessels über einen Zeitraum von 250 Minuten. Die x-Achse in den Fig. 3 gibt die Anzahl der Neuronen in x-Richtung, die y-Achse die Anzahl der Neuronen in y-Richtung an. Die verschiedenen Lastzustände der Anlage werden durch helle Cluster im Bild markiert.

Schritt 3.3. Übereinanderlegen von Trajektorien verschiedener Prozeßvorgänge für visuellen Vergleich und Analyse komplexer dynamischer Vorgänge

Da auf einer Karte mehrerer Trajektorien übereinandergelegt werden können, kann man einen beliebigen Prozeßvorgang tᵤ mit einem vorherigen Referenzvorgang tᵣ visuell vergleichen. So lassen sich nicht nur einzelne Prozeßzustände, sondern auch komplexe Prozeßvorgänge miteinander vergleichen; Abweichungen werden sehr schnell erkannt. Damit ist eine ganzheitliche, visuelle Fehlerdetektion selbst für dynamische Kraftwerksvorgänge möglich.

**Fig. 4** zeigt ein Beispiel für zwei verschiedene Kesselfahrten, die schwarze Trajektorie tᵣ entspricht einer 'guten' Referenzanfahrt, die weiße Trajektorie tᵤ stellt hier einen Lastwechsel von 126 MW auf 95 MW dar. Die x-Achse gibt in den Fig. 4 die Anzahl der Neuronen in x-Richtung, die y-Achse die Anzahl der Neuronen in y-Richtung an. Die potentiellen Lastzustände der Anlage werden durch helle Cluster im Bild markiert.

### Verfahrensschritt 4: Anwendung - Diagnosephase der Karte

Um die Ursache für Abweichungen zwischen dem Verlauf von Trajektorien zu bestimmen, kann man die Gewichtsverteilung der einzelnen Neuronen analysieren, da in den Gewichten die realen Werte der Prozeßgrößen kodiert sind.

Um das zu verdeutlichen, sollen beispielhaft die unterschiedlichen Gewichtsverteilungen zweier Neuronen herausgegriffen werden: Neuron 'N' ist im Anlagenraum virtuell im Zustand 28 MW plaziert, Neuron 'M' spricht auf den Lastzustand 130 MW an, ihre räumliche Lage auf der Karte ist in Fig. 4 als weiße Kreisfläche markiert.

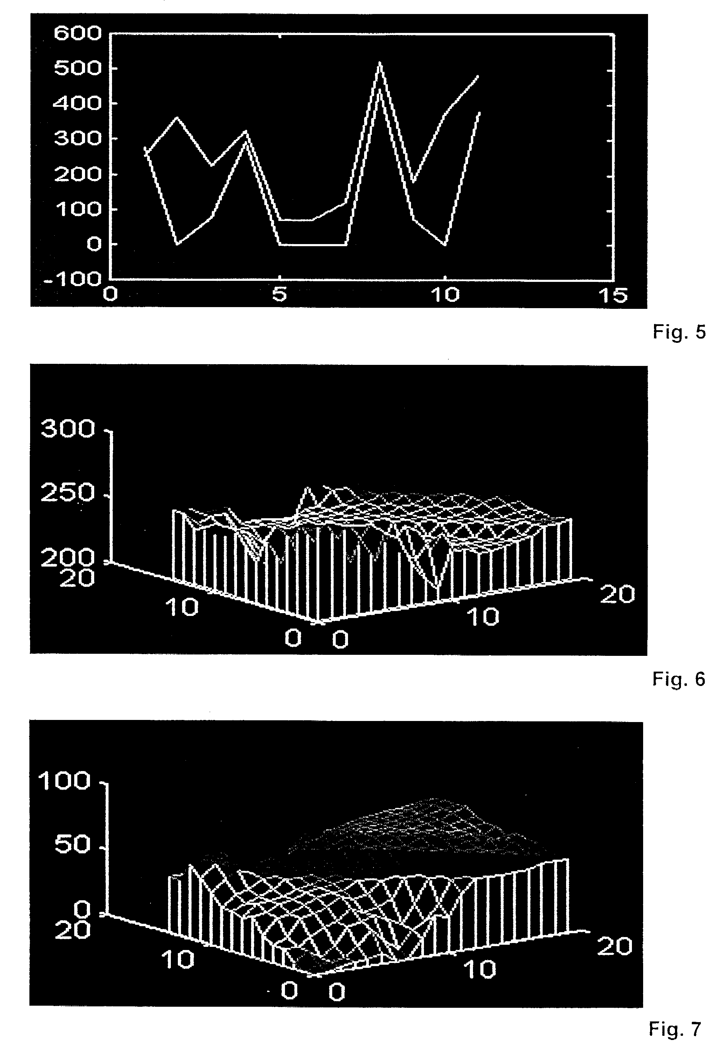

**Fig. 5** stellt die Gewichtsverteilung dieser zwei Karten-Neuronen dar. Die x-Achse in Fig. 5 entspricht den Gewichten w₁,w₂,..,w₁₁ der Neuronen 'N' und 'M', die y-Achse stellt die normierte Werte der einzelnen Gewichte dar. Man sieht, daß sich die Neuronen vor allem in ihren Gewichten w₁₀, w₂ und w₃ unterscheiden. Mit einer Standardabweichungsberechnung bestätigt man das.

Diese berechneten Indizes - im Beispiel (10,2,3) -lassen sich nun eindeutig auf die jeweiligen Prozeßwerte abbilden, da es -bedingt durch das Lernverfahren- eine eindeutige Zuordnung zwischen den Gewichten und den einzelnen Prozeßgrößen gibt. Im Beispiel liegen die Unterschiede in den Prozeßgrößen: Frischdampfmenge Kesselaustritt, Speisewassermenge Kesseleintritt, Speisewasserdruck Kesseleintritt.

Durch eine Berechnung des *Korrelationskoeffizienten* und der *Standardabweichung* der Gewichtsverteilung ausgewählter (vom Operator angewählter) Neuronen, wird die Prozeßanalyse ermöglicht. Der Operator kann somit on-line die Ursache zweier beliebiger Abweichungen ermitteln, denn er braucht auf der Karte nur noch die Neuronen 'anklicken' bei denen sich die Trajektorien (visuell) besonders unterscheiden, z.B. durch Abstand a in Fig. 4. Die Ursache der Abweichungen, d.h. die Prozeßgrößen mit den größten Standardabweichungen, werden nachfolgend berechnet. Damit lassen sich mit der Karte einfache Möglichkeiten einer Diagnose realisieren.

### Verfahrensschritt 5: Darstellen von Prozeßzusammenhängen mit der Karte

Schritt 5.1. Ein weiterer möglicher Verarbeitungsschritt auf der Karte führt zur Anwendung von DataMining-Strategien im Kraftwerksbereich, dabei werden die Gewichtsverteilungen einzelner Prozeßgrößen über die gesamte Karte dargestellt, die **Figuren 6** und **7** verdeutlichen das an einem Beispiel. Da die Prozeßverteilung in den Gewichten der Neuronen auf der Karte kodiert ist und die Gewichtsverteilung über der Karte dargestellt werden kann, erhält man damit eine eindeutige Aussage über die Verteilung der realen Prozeßgrößen über der Map und damit eine Verteilung im Zustandsraum der Anlage.

Die graphische Umsetzung dieser Gewichtsverteilungen auf eine dreidimensionalen Darstellung erfolgt in der Form, daß jeweils die Größe des Gewichtes **w**_{**k**} jedes Neurons in der z-Achse über der Karte in den x-y-Achsen aufgetragen und visualisiert wird. Fig. 6 zeigt die Verteilung der Speisewassertemperatur (z-Achse) über der Karte (x,y-Achse) und Fig. 7 stellt die Verteilung der Kohlezuteiler-Drehzahl (z-Achse) über der Karte (x,y-Achse) dar.

Beim Vergleich dieser Verteilungen mit den dargestellten (realen) Anlagenzuständen auf der Karte (Cluster) lassen sich neuartige Hypothesen über die verschiedenen Anlagenzustände ermitteln.

Schritt 5.2. Durch Anwendung der Methode zur statischen Visualisierung von Gewichtsdifferenzen (vgl. vorheriges Kapitel) für ausgewählte Prozeßgrößen lassen sich Zusammenhänge zwischen diesen Größen und vorhandenen Prozeßzuständen visualisieren, die nicht erkennbar wären, wenn die kompletten Gewichtsverteilungen ausgewertet würden.

Mit den o.g. Verfahrensschritten lassen sich die Möglichkeiten der Prozeßanalyse entscheidend erweitern, denn damit ist es möglich neuartige Prozeßzusammenhänge nicht nur zu verifizieren, sondern neues, vorher nicht bekanntes Wissen zu erzeugen.

Schritt 5.3. Durch eine graphische Extrapolation des Trajektorienverlaufs tᵤ zu einem vorgebbaren Zeitpunkt tₒ in einem vorgebbaren Zeitabschnitt Δt entlang des Referenzverlaufes tᵣ auf einen zu erwartenden Prozeßzustand zu einem zweiten Zeitpunkt tₒ+Δt, lassen sich zukünftige Prozeßwerte schätzen, indem die zum erwarteten Prozeßzustand gehörenden Prozeßwerte ermittelt und ausgegeben werden.

### Verfahrensschritt 6: Automatisches Erkennen von Prozeßabweichungen

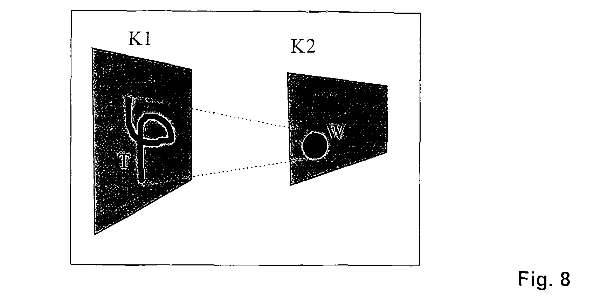

Bisher wurde die Abweichung zweier Trajektorien visuell ermittelt, d.h. der Operator muß die Karte während der zu untersuchenden Prozeßvorgänge beobachten. Um diesen Vorgang zu automatisieren, wird mit hierarchischen Karten gearbeitet. Eine nachgeschaltete Supervisor-Karte 'beobachtet' die Trajektorien auf der vorherigen Prozeßkarte und wertet diese aus. **Fig. 8** zeigt das schematisch, die Prozeßkarte ist mit K1 und die Supervisor-Karte mit K2 benannt. T stellt eine beliebige Trajektorie auf der Prozeßkarte und W das dazugehörige Gewinnerneuron auf der Supervisor-Karte dar.

Dabei werden die zu lernenden diskreten Trajektorienpositionen t₁,t₂, ... tₘ auf der Prozeßkarte K1 in Datenvektoren der Dimension m kodiert und der Supervisor-Karte K2 als Eingangsdaten zur Verfügung gestellt. Diese Supervisor-Karte arbeitet wieder nach dem Algorithmus von Kohonen, d.h. das Lernen der topologischen Zusammenhänge der Trajektorien auf der Prozeßkarte erfolgt durch Anwendung dieses Algorithmus auf der Supervisor-Karte. Damit lernt die Supervisor-Karte die Trajektorienverläufe auf der Prozeßkarte und es lassen sich folgende Funktionalitäten realisieren:

### Prozeßkarte: Darstellung des aktuellen und vergangenen Prozeßverlaufes als Trajektorie

Supervisorkarte: Kodierung und Darstellung der *Topologie* und Lage relevanter Trajektorienabschnitte von der Prozeßkarte. Die Trajektorienverläufe der Prozeßkarte werden auf Supervisor-Karte durch je ein 'Supervisor'-Neuron kodiert, das genau dann aktiv ist, wenn auf Prozeßkarte der jeweilige Trajektorienabschnitt dargestellt wird.

Die Supervisor-Karte realisiert damit eine weitere Dimensionsreduktion und zwar wird -wie beschrieben- ein Teilvorgang des Prozesses auf der Prozeßkarte als Trajektorienverlauf mit m diskreten Trajektorienpositionen dargestellt, auf der Supervisor-Karte wird dieser Trajektorienverlauf aber zu einem einzigen Neuron, und damit zu einem einzigen Punkt zusammengefaßt. Durch Anwendung des Lernverfahrens nach Kohonen bilden sich somit auf der Supervisor-Karte Neuronencluster heraus, die ähnlichen Trajektorienabschnitten auf der Prozeßkarte entsprechen.

In der Anwendungsphase der Supervisor-Karte wird der zu untersuchende Trajektorienabschnitt auf der Prozeßkarte - der wieder aus m diskreten Trajektorienpositionen bestehen muß - durch die Supervisor-Karte analysiert und auf Ähnlichkeit mit vorher gelernten Trajektorienabschnitten verglichen. Die Ähnlichkeit zeigt sich im Abstand des aktuellen Gewinnerneurons von den 'Supervisor'-Neuron für die jeweiligen vorher gelernten Trajektorienabschnitte. Dieser Abstand ist damit ein Maß für die Ähnlichkeit zweier Trajektorien- bzw. Teiltrajektorienverläufe.

Ist der Abstand größer als ein einstellbarer Schwellwert, erkennt das Diagnosesystem automatisch, daß der aktuelle Trajektorienverlauf -der z.B. einen aktuellen Lastwechsel darstellen kann- von einem vorher gelernten Referenzverlauf abweicht.

Damit wird das System eine Fehlermeldung generieren und die Ursache der Trajektorienabweichung wird auf Grundlage des Verfahrensschritts 4 automatisch ermittelt, indem für die jeweiligen Trajektorienabweichungen die Ursachen berechnet werden, durch automatische Anlayse der Gewichtsverteilungen zugrundeliegender Neuronen.

### Gesamtverfahren

Durch Anwendung dieses Verfahren wird einem Prozeßbeobachter und -bediener die Möglichkeit gegeben, selbst hochkomplexe dynamische Prozesse intuitiv zu erfassen und die Auswirkungen seiner Prozeßeingriffe unmittelbar zu beobachten. Da das Verfahren in der Anwendungsphase *echtzeitfähig* ist, kann diese Prozeßanalyse und Diagnose zur Unterstützung der on-line Prozeßführung verwendet werden.

Der Vorteil des hier beschriebenen Verfahrens liegt daran, daß man nicht nur verschiedene *Prozeßzustände* miteinander vergleichen, sondern selbst komplexe und transiente *Prozeßvorgänge* wie komplette An -oder Abfahrten aufzeichnen und *automatisch* gegenüberstellen kann, damit kommt es zu einer leistungsfähigen Erweiterung gängiger Analysesysteme im Kraftwerksbereich. Das Verfahren stellt ein automatisiertes Diagnosesystem für transiente Kraftwerksvorgänge dar.

Ein weiterer Vorteil des Verfahrens liegt in dem geringen Engineering-Aufwand. Da das Lernen und Strukturieren der Karten und auch das Aufzeichnen der Trajektorien automatisiert erfolgt und vollständig durch das Verfahren erbracht wird, entfällt aufwendiges Engineering von Referenzmodellen. Dieses Engineering ist integraler Bestandteil des Verfahrens selbst.

## Patentansprüche

1. Verfahren zur Analyse und Darstellung von Prozeßgrößen, Prozeßzuständen oder Folgen von Prozeßzuständen einer technischen Anlage, bei dem alle für einen Prozeß relevanten Größen zusammengefaßt und durch eine neuronale Analyse auf der Grundlage von Kohonen-Karten in Beziehung zueinander ausgewertet werden, indem eine topologieerhaltende Projektion von Daten der relevanten Prozeßgrößen auf eine zweidimensionale Kohonen-Karte realisiert wird, dadurch gekennzeichnet, daß
a) auf der Kohonen-Karte zunächst als Referenztrajektorie (tᵣ) eine Folge von Prozeßzuständen (z, z+1) dargestellt wird, indem die Neuronen, die die jeweiligen Prozeßzustände repräsentieren, graphisch miteinander verbunden werden,
b) zur Beurteilung des Prozesses außerdem wenigstens eine weitere, durch graphische Verbindung von visualisierten Prozeßzuständen gebildete Trajektorie (tᵤ) auf der Karte dargestellt wird, und
c) durch folgende zusätzliche Maßnahmen eine manuelle Prozeßanalyse ermöglicht wird, nachdem ein Benutzer die Kartenabschnitte, also Neuronen, mit der größten Abweichung (Abstand a) zweier Trajektorien (tᵣ, tᵤ) ausgewählt hat:
- Berechnen der Standardabweichung der Verteilung der Gewichte (w₁....w₁₁) der selektierten Neuronen und Ausgabe der Gewichte (z.B. w₁₀, w₃, w₂) mit den größten Abweichungen untereinander, und damit Ermitteln der den Gewichtsindizes (1....11, z.B. 10, 3, 2) zugeordneten Prozeßgrößen, die die Abweichungen der jeweiligen Trajektorie (tᵤ) von der Referenztrajektorie (tᵣ) am meisten verursachen.

2. Verfahren zur Analyse und Darstellung von Prozeßgrößen, Prozeßzuständen oder Folgen von Prozeßzuständen einer technischen Anlage, bei dem alle für einen Prozeß relevanten Größen zusammengefaßt und durch eine neuronale Analyse auf der Grundlage von Kohonen-Karten in Beziehung zueinander ausgewertet werden, indem eine topologieerhaltende Projektion von Daten der relevanten Prozeßgrößen auf eine zweidimensionale Kohonen-Karte (K1) realisiert wird, dadurch gekennzeichnet, daß
a) auf der Kohonen-Karte (K1) zunächst als Referenztrajektorie (tᵣ) eine Folge von Prozeßzuständen (z, z+1) dargestellt wird, indem die Neuronen, die die jeweiligen Prozeßzustände repräsentieren, graphisch miteinander verbunden werden,
b) zur Beurteilung des Prozesses außerdem wenigstens eine weitere, durch graphische Verbindung von visualisierten Prozeßzuständen gebildete Trajektorie (tᵤ) auf der Karte (K1) dargestellt wird, und
c) durch folgende zusätzliche Maßnahmen eine automatisierte Diagnose durchgeführt wird: automatisiertes Erkennen der Abweichungen von zwei Trajektorienverläufen (tᵣ, tᵤ) auf einer Prozeßkarte (K1) mit Hilfe einer Supervisorkarte (K2), indem on-line die zu untersuchenden Trajektorienabschnitte, bestehend aus einer vorgebbaren Anzahl (m) von Trajektorienpositionen (t₁, t₂, ... tₘ), mit Referenzabschnitten verglichen werden, indem die jeweiligen Trajektorienabschnitte auf die Supervisorkarte (K2) projiziert und die Abstände der Gewinnerneuronen (W) beider Trajektorienverläufe (tᵣ, tᵤ) auf der Supervisorkarte (K2) miteinander verglichen werden, und bei Abweichungen um einen vorgebbaren Wert eine Fehlermeldung generiert und zur Ursachenbestimmung die nachstehenden Schritte automatisiert ausgeführt werden:
Berechnen der Standardabweichung der Gewichtsverteilung der jeweiligen Neuronen (N, M, oder Neuronen im Abstand a) beider Trajektorien (tᵣ, tᵤ) auf der Prozeßkarte (K1) und Ermittlung der Gewichte mit den größten Abweichungen untereinander (w₁₀, w₃, w₂) und damit Bestimmung der den Gewichtsindizes (10, 3, 2) zugeordneten Prozeßgrößen und daraus folgende Bestimmung der Prozeßgrößen, die die Trajektorienabweichung auf der Kohonen-Karte (K1) am meisten verursacht haben.

3. Verfahren nach Anspruch 1, dadurch gekennzeichnet, daß durch folgende zusätzliche Maßnahmen eine Prognose von Prozeßgrößen vorgenommen wird:
a) graphische Extrapolation des Trajektorienverlaufes (tᵤ) zu einem ersten Zeitpunkt (t₀) in einem vorgebbaren Zeitabschnitt (Δt) zur Ermittlung eines zu einem zweiten Zeitpunkt (t₀+Δt) zu erwartenden Prozeßzustandes, wobei die Extrapolation auf der Grundlage des weiteren Verlaufs der Referenztraktorie (tᵣ) erfolgt,
b) Ermitteln und Ausgeben der zum jeweiligen so prognostizierten Prozeßzustand gehörigen Prozeßgrößen und Prozeßwerte durch Rücktransformation, und
c) Bereitstellen der prognostizierten Prozeßwerte für ausgewählte Prozeßgrößen für nachgeschaltete Regel- und Steuerungssysteme.

4. Verfahren nach einem der vorstehenden Ansprüche, dadurch gekennzeichnet, daß die technische Anlage eine Kraftwerksanlage oder ein Teil einer solchen Anlage ist.

5. Verfahren nach Anspruch 4, dadurch gekennzeichnet, daß erfaßte Prozeßzustände (z, z+1) unterschiedliche Lastzustände sind.

6. Verfahren nach einem der vorstehenden Ansprüche 1 bis 5, dadurch gekennzeichnet, daß die Verteilung einer ausgewählten Prozeßgröße über der Kohonen-Karte höhen- oder farbcodiert dargestellt wird, indem die der Prozeßgröße entsprechende Gewichtsverteilung als Höhe oder Farbe über der Karte aufgetragen wird.

7. Verfahren nach einem der Ansprüche 1 bis 5, dadurch gekennzeichnet, daß die Verteilung mehrerer ausgewählter Prozeßgrößen über der Kohonen-Karte dargestellt wird, wobei die Gewichtsdifferenzen eines Neurons zu seinem Nachbarneuronen ausgewählter Prozeßgrößen ermittelt und farbcodiert dargestellt wird.

## Claims

1. Method for analysing and representing process variables, process states or sequences of process states of a technical plant, in which all the variables which are relevant for a process are combined and evaluated in relationship with one another by means of a neural analysis on the basis of Kohonen maps by making a topological projection of data about the relevant process variables onto a two-dimensional Kohonen map, characterized in that
a) a sequence of process states (z, z+1) is initially represented on the Kohonen map as a reference trajectory (tᵣ) by connecting graphically to one another the neurons which represent the respective process states,
b) in order to assess the process, in addition at least one further trajectory (tᵤ), formed by graphical connection of visualized process states, is represented on the map, and
c) a manual process analysis is made possible by means of subsequent additional measures after a user has selected the portions of the map, that is to say neurons, with the greatest degree of deviation (distance a) between two trajectories (tᵣ, tᵤ):
Calculation of the standard deviation of the distribution of weights (w₁ ... w₁₁) of the selected neurons and outputting of the weights (for example w₁₀, w₃, w₂) with the greatest deviations from one another and thus determination of the process variables which are assigned to the weight indices (1....11, e.g. 10, 3, 2) and which are most responsible for the deviations between the respective trajectory (tᵤ) from the reference trajectory (tᵣ).

2. Method for analysing and representing process variables, process states or sequences of process states of a technical plant, in which all the variables which are relevant for process are combined and evaluated in relationship with one another by means of a neural analysis on the basis of Kohonen maps by making a topological projection of data of the relevant process variables onto a two-dimensional Kohonen map (K1), characterized in that,
a) a sequence of process states (z, z+1) is initially represented on the Kohonen map as a reference trajectory (tᵣ) by connecting graphically to one another the neurons which represent the respective process states,
b) in order to assess the process, in addition at least one further trajectory (tᵤ), formed by graphical connection of visualized process states, is represented on the map (K1), and
c) by means of following additional measures, an automatic diagnosis is carried out: automatic detection of the deviations between two trajectory profiles (tᵣ, tᵤ) on a process map (K1) with the aid of a supervisor map (K2) by comparing on-line the portions of trajectories which are to be investigated, composed of a predefinable number (m) of trajectory positions (t₁, t₂, ... tₘ), with reference portions, by projecting the respective portions of trajectories onto the supervisor map (K2), and comparing the distances between the winner neurons (W) of two trajectory profiles (tᵣ, tᵤ) on the supervisor map (K2) with one another, and, in the event of deviations by a predefinable value, generating a fault message and carrying out in automated fashion the following steps in order to determine the cause:
Calculation of the standard deviation of the weight distribution of the respective neurons (N, M, or neurons at the distance a) of the two trajectories (tᵣ, tᵤ) on the process map (K1) and determination of the weights with the greatest deviations from one another (w₁₀, w₃, w₂), and thus determination of the process variables associated with the weight indices (10, 3, 2) and consequent determination of the process variables which are most responsible for the deviation between the trajectories on the Kohonen map (K1).

3. Method according to Claim 1, characterized in that a prognosis of process variables is performed by means of the following additional measures:
a) Graphical extrapolation of the trajectory profile (tᵤ) at a first time (t_{φ}) in a predefinable time period (Δt) in order to determine a process state to be expected at a second time (t_{φ}+Δt), the extrapolation being carried out on the basis of the further profile of the reference trajectory (tᵣ),
b) Determination and outputting of the process variables and process values which are associated with the respective forecast process state by means of inverse transformation, and
c) provision of the forecast process values for selected process variables for closed-loop and open-loop control systems connected downstream.

4. Method according to one of the preceding claims, characterized in that the technical plant is a power plant or part of such a plant.

5. Method according to Claim 4, characterized in that recorded process states (z, z+1) are different load states.

6. Method according to one of the preceding Claims 1 to 5, characterized in that the distribution of a selected process variable is represented on the Kohonen map by means of height coding or colour coding by plotting the weight distribution corresponding to the process variable as a height or colour on the map.

7. Method according to one of Claims 1 to 5, characterized in that the distribution of a plurality of selected process variables is represented on the Kohonen map, the weight differences of a neuron with respect to its neighbouring neurons of selected process variables being determined and represented with colour coding.

## Revendications

1. Procédé d'analyse et de visualisation de grandeurs de processus, d'états de processus ou de suites d'états de processus d'une installation technique, suivant lequel toutes les grandeurs intéressant un processus sont réunies et, par une analyse neuronale sur la base de cartes de Kohonen, exploitées en relation mutuelle par une projection, avec conservation de la topologie, de données des grandeurs intéressantes du processus sur une carte de Kohonen bidimensionnelle, caractérisé par le fait que
a) sur la carte de Kohonen est d'abord visualisée une suite d'états de processus (z, z+1), en tant que trajectoire de référence (tᵣ), par mise en liaison graphique des neurones représentant les états de processus respectifs,
b) pour l'évaluation du processus, au moins une trajectoire (tᵤ) supplémentaire, formée par liaison graphique d'états de processus visualisés, est également représentée sur la carte, et
c) après qu'un utilisateur ait sélectionné les parties de carte, donc les neurones, ayant le plus grand écart (distance a) de deux trajectoires (tᵣ, tᵤ), une analyse manuelle de processus est rendue possible par les dispositions supplémentaires suivantes :
calcul de l'écart standard de la distribution des poids (w₁...w₁₁) des neurones sélectionnés et édition des poids (par exemple w₁₀, w₃, w₂) ayant les plus grands écarts entre eux, et par cela détermination des grandeurs de processus associées aux indices de poids (1...11, par exemple 10, 3, 2) provoquant le plus les écarts de la trajectoire respective (tᵤ) par rapport à la trajectoire de référence (tᵣ.

2. Procédé d'analyse et de visualisation de grandeurs de processus, d'états de processus ou de suites d'états de processus d'une installation technique, suivant lequel toutes les grandeurs intéressant un processus sont réunies et, par une analyse neuronale, sur la base de cartes de Kohonen, exploitées en relation mutuelle par une projection, avec conservation de la topologie, de données des grandeurs intéressantes du processus sur une carte de Kohonen bidimensionnelle, caractérisé par le fait que
a) sur la carte de Kohonen est d'abord visualisée une suite d'états de processus (z, z+1), en tant que trajectoire de référence (tᵣ), par mise en liaison graphique des neurones représentant les états de processus respectifs,
b) pour l'évaluation du processus, au moins une trajectoire (tᵤ) supplémentaire, formée par liaison graphique d'états de processus visualisés, est également représentée sur la carte, et
c) un diagnostic automatique est effectué par des dispositions supplémentaires suivantes : reconnaissance automatisée des écarts de deux allures de trajectoire (tᵣ, tᵤ) sur une carte de processus (K1) à l'aide d'une carte superviseur (K2) par comparaison on-line des parties de trajectoires à étudier, composées d'un nombre prédéterminable (m) de positions de trajectoires (t₁, t₂, ...tₘ), avec des parties de référence, par projection des parties de trajectoires respectives sur la carte superviseur (K2) et comparaison des écarts des neurones gagnants (W) des deux allures de trajectoires (tᵣ, tᵤ) sur la carte superviseur (K2), et en cas d'écarts de valeur prédéterminable, génération d'une signalisation d'erreur et exécution automatique des étapes suivantes, en vue de la détermination de la cause :
calcul de l'écart standard de la distribution de poids des neurones respectifs (N, M, ou neurones à distance a) des deux trajectoires (tᵣ, tᵤ) sur la carte de processus (K1) et définition des poids ayant les plus grands écarts entre eux (w₁₀, w₃, w₂), donc détermination des grandeurs de processus associées aux indices de poids (10, 3, 2) et, par là, détermination des grandeurs de processus ayant provoqué le plus l'écart de trajectoire sur la carte de Kohonen (K1).

3. Procédé suivant la revendication 1, caractérisé par le fait qu'une prédiction de grandeurs de processus est effectué par les dispositions supplémentaires suivantes :
a) extrapolation graphique de l'allure de trajectoire (tᵤ) à un premier instant (tₒ) dans un intervalle de temps prédéterminable (Δt) pour la définition d'un état de processus à intervenir à un deuxième instant (tₒ+Δt), l'extrapolation ayant lieu sur la base de l'allure ultérieure de la trajectoire de référence (tᵣ),
b) définition et édition des grandeurs de processus et valeurs de processus correspondant à l'état de processus respectif ainsi prédit, par retransformation, et
c) mise à disposition des valeurs de processus prédites pour des grandeurs de processus sélectionnées, pour des systèmes de régulation et de commande montés à la suite.

4. Procédé suivant l'une des revendications précédentes, caractérisé par le fait que l'installation technique est une centrale ou une partie d'une telle installation.

5. Procédé suivant la revendication 4, caractérisé par le fait que les états de processus (z, z+1) déterminés sont des états de charge différents.

6. Procédé suivant l'une des revendications précédentes 1 à 5, caractérisé par le fait que la distribution d'une grandeur de processus sélectionnée est représentée en codage de hauteur ou en codage de couleur dans la carte de Kohonen, la distribution de poids correspondant à la grandeur de processus étant portée en hauteur ou en couleur dans la carte.

7. Procédé suivant l'une des revendications 1 à 5, caractérisé par le fait que la distribution de plusieurs grandeurs de processus sélectionnées est représentée dans la carte de Kohonen, la différence de poids d'un neurone par rapport à son neurone voisin pour des grandeurs de processus sélectionnées étant déterminée et représentée en codage de couleur.
